# EUROPÄISCHE PATENTANMELDUNG

(11) **EP 3 501 714 A1**
(43) Veröffentlichungstag der Anmeldung: **26.06.2019**
(21) Anmeldenummer: 17209916.0
(22) Anmeldetag: 22.12.2017
(51) Int. Cl.: B23B 51/04

(54) **BOHRKRONE MIT EINEM SCHRAUBENFÖRMIGEN FÜHRUNGSELEMENT**

(71) Anmelder: HILTI Aktiengesellschaft, 9494 Schaan (LI)
(72) Erfinder: Schroeder, Florian, 7304 Maienfeld (CH); Weber, Christoph, 6315 Oberägeri (CH); Schneider, Roland, 6824 Schlins (AT)
(74) Vertreter: Hilti Aktiengesellschaft Corporate Intellectual Property

(57) **Zusammenfassung**

Bohrkrone (10) zum Erstellen eines Bohrloches (31) mit einem Bohrlochdurchmesser (d₂) und einem Bohrkern (32) mit einem Kerndurchmesser (d₁) in einem Werkstück (28), aufweisend einen Bearbeitungsabschnitt (11) mit einem oder mehreren Bohrsegmenten (15), einen Bohrschaftabschnitt (12) mit einem rohrförmigen Bohrschaft (16) und eine Verbindungseinrichtung (13), die den Bearbeitungsabschnitt (11) und den Bohrschaftabschnitt (12) lösbar oder unlösbar miteinander verbindet, wobei der Bohrschaftabschnitt (12) mindestens ein schraubenförmiges Führungselement (17) aufweist, das mit dem rohrförmigen Bohrschaft (16) kraft- oder stoffschlüssig verbunden ist und an einer Außenseite und/oder einer Innenseite des Bohrschaftes (16) gegenüber dem rohrförmigen Bohrschaft (16) übersteht.

## Beschreibung

### Technisches Gebiet

Die vorliegende Erfindung betrifft eine Bohrkrone mit einem schraubenförmigen Führungselement gemäß dem Oberbegriff des Anspruchs 1.

### Stand der Technik

Bohrkronen bestehen aus mehreren Bohrkronenabschnitten, die als Bearbeitungsabschnitt und Bohrschaftabschnitt ausgebildet sind. Der Bearbeitungsabschnitt umfasst einen Ringabschnitt und ein oder mehrere Bohrsegmente, die mit dem Ringabschnitt verschweißt, verlötet, verschraubt oder in einer anderen geeigneten Befestigungsart am Ringabschnitt befestigt sind. Der Bohrschaftabschnitt umfasst einen rohrförmigen Bohrschaft, einen Deckel und ein Einsteckende, über das die Bohrkrone in der Werkzeugaufnahme eines Kernbohrgerätes befestigt wird. Der Bohrschaft wird aus einem rohrförmigen Material gefertigt oder aus einem ebenen Bandmaterial, das zu einem Rohr umgeformt und an den Bandkanten durch Längsnahtschweißen verbunden wird. Der Bearbeitungsabschnitt und Bohrschaftabschnitt sind mittels einer Verbindungseinrichtung lösbar oder unlösbar verbunden. Bei Bohrkronen mit einer unlösbaren Verbindungseinrichtung zwischen dem Bearbeitungsabschnitt und Bohrschaftabschnitt können der Ringabschnitt des Bearbeitungsabschnitts und der Bohrschaft monolithisch ausgebildet sein, alternativ kann der Ringabschnitt stoffschlüssig mit dem Bohrschaft verbunden sein.

Im Bohrbetrieb erzeugt eine Bohrkrone in einem Werkstück einen Bohrkern mit einem Kerndurchmesser und ein Bohrloch mit einem Bohrlochdurchmesser. Die Bohrsegmente bilden einen Schneidring mit einem Innendurchmesser, der dem Kerndurchmesser entspricht, und einem Außendurchmesser, der dem Bohrlochdurchmesser entspricht. Beim Bohren wird zwischen Nassbohren und Trockenbohren unterschieden. Bohrkronen zum Nassbohren (Nassbohrkronen) unterscheiden sich im Aufbau von Bohrkronen zum Trockenbohren (Trockenbohrkronen). Beim Nassbohren ist eine Kühl- und Spülflüssigkeit erforderlich, die als Kühlflüssigkeit die Bohrsegmente der Bohrkrone kühlt und als Spülflüssigkeit Bohrklein aus dem Bohrloch abtransportiert. Saubere Kühl- und Spülflüssigkeit wird in der Regel über einen Innenspalt zwischen dem Bohrkern und dem Bohrschaft zugeführt und mit Bohrklein versetzte, verbrauchte Kühl- und Spülflüssigkeit über einen Außenspalt zwischen dem Bohrschaft und dem Bohrloch abgeführt.

Nassbohrkronen, die sowohl einen Innenspalt zwischen Bohrkern und Bohrschaft als auch einen Außenspalt zwischen Bohrschaft und Bohrloch aufweisen, werden im Bohrbetrieb ausschließlich über den Bearbeitungsabschnitt geführt, der gesamte Bohrschaft weist keine Führung auf. Die mangelnde Führung des Bohrschaftes kann während des Bohrens zu unerwünschten Bewegungen der Bohrkrone führen, die die Qualität des Bohrloches verschlechtern. Je stärker die Bewegungen der Bohrkrone sind, umso stärker kann die Geometrie des Bohrloches von der Kreisform abweichen. Außerdem können durch Krafteinwirkung des Bohrkerns oder des Bohrloches auf den Bohrschaft Verformungen des Bohrschaftes auftreten.

Um die Führung einer Nassbohrkrone zu verbessern, sind Bohrkronen ohne Innenspalt und/oder ohne Außenspalt bekannt, wobei die Kühl- und Spülflüssigkeit über spezielle Transportkanäle in der Außenseite des Bohrschaftes transportiert wird. Nachteilig ist, dass der Bohrschaft an der Innenseite eine große Kontaktfläche zum Bohrkern und an der Außenseite eine große Kontaktfläche zum Bohrloch aufweist. Die großen Kontaktflächen an der Innen- und Außenseite des Bohrschaftes führen zu einer starken Reibung. Je grösser die Reibung zwischen dem Bohrschaft und dem Bohrkern bzw. zwischen dem Bohrschaft und dem Bohrloch ist, umso geringer sind der Bohrfortschritt der Bohrkrone bei gleicher Leistung des Kernbohrgerätes und die Lebensdauer des Bohrschaftes.

### Darstellung der Erfindung

Die Aufgabe der vorliegenden Erfindung besteht darin, eine Bohrkrone dahingehend weiterzuentwickeln, dass die Stabilität und die Führung des Bohrschaftes beim Bohren, insbesondere beim Nassbohren mit einer Kühl- und Spülflüssigkeit, verbessert sind. Außerdem sollen der Bohrfortschritt der Bohrkrone erhöht und/oder die Lebensdauer des Bohrschaftes verlängert werden.

Diese Aufgabe wird bei der eingangs genannten Bohrkrone erfindungsgemäß durch die Merkmale des unabhängigen Anspruchs 1. Vorteilhafte Weiterbildungen sind in den abhängigen Ansprüchen angegeben.

Die Bohrkrone ist erfindungsgemäß dadurch gekennzeichnet, dass der Bohrschaftabschnitt mindestens ein schraubenförmiges Führungselement aufweist, das mit dem rohrförmigen Bohrschaft kraft- oder stoffschlüssig verbunden ist und an einer Außenseite des Bohrschaftes und/oder einer Innenseite des Bohrschaftes gegenüber dem rohrförmigen Bohrschaft übersteht. Ein an der Innenseite und/oder Außenseite des Bohrschaftes überstehendes schraubenförmiges Führungselement verbessert die Führung des Bohrschaftes beim Bohren. Bei einem an der Außenseite des Bohrschaftes überstehenden schraubenförmigen Führungselement erfolgt die Führung über das Bohrloch und bei einem an der Innenseite des Bohrschaftes überstehenden schraubenförmigen Führungselement erfolgt die Führung über den Bohrkern. Das mindestens eine schraubenförmige Führungselement wirkt für den Bohrschaft zusätzlich als Versteifungselement und erhöht die Steifigkeit des Bohrschaftes, wobei ein Bohrschaft mit einer höheren Steifigkeit die Stabilität des Bohrschaftes beim Bohren verbessert.

Das schraubenförmige Führungselement kann neben einer verbesserten Führung des Bohrschaftes den Transport der Kühl- und Spülflüssigkeit beim Nassbohren verbessern. An der Innenseite des Bohrschaftes wird saubere Kühl- und Spülflüssigkeit zur Bearbeitungsstelle transportiert und an der Außenseite des Bohrschaftes wird mit Bohrklein versetzte, verbrauchte Kühl- und Spülflüssigkeit abtransportiert. Das schraubenförmige Führungselement wirkt als Förderwendel für die Kühl- und Spülflüssigkeit, wenn die Drehrichtung der Bohrkrone und die Windungsrichtung des schraubenförmigen Führungselementes übereinstimmen.

Die erfindungsgemäße Bohrkrone weist einen Bearbeitungsabschnitt mit einem oder mehreren Bohrsegmenten, einen Bohrschaftabschnitt mit einem rohrförmigen Bohrschaft und einem schraubenförmigen Führungselement sowie eine Verbindungseinrichtung, die den Bearbeitungsabschnitt und Bohrschaftabschnitt lösbar oder unlösbar miteinander verbindet, auf. Der Bearbeitungsabschnitt umfasst ein einzelnes Bohrsegment, das einen geschlossenen Schneidring bildet, oder mehrere Bohrsegmente, die ringförmig angeordnet werden und einen Schneidring mit Zwischenräumen bilden. Bei Bohrkronen mit einem Bearbeitungsabschnitt, der lösbar mit dem Bohrschaftabschnitt verbunden ist, umfasst der Bearbeitungsabschnitt neben den Bohrsegmenten einen Ringabschnitt. Die Verbindungseinrichtung ist als lösbare oder unlösbare Verbindungseinrichtung ausgebildet. Eine Verbindungseinrichtung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindungseinrichtung wird als unlösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung.

In einer ersten bevorzugten Variante der Bohrkrone steht das mindestens eine schraubenförmige Führungselement an der Außenseite des Bohrschaftes mit einem Außenüberstand Δ_{A} gegenüber dem rohrförmigen Bohrschaft über. Ein an der Außenseite des Bohrschaftes überstehendes schraubenförmiges Führungselement verbessert die Führung des Bohrschaftes beim Bohren. Der Außenüberstand Δ_{A} des schraubenförmigen Führungselementes wird so eingestellt, dass das schraubenförmige Führungselement an der Außenseite des Bohrschaftes mit dem Bohrloch in Kontakt steht. Durch das überstehende schraubenförmige Führungselement weist der Bohrschaft eine geringe Kontaktfläche zum Bohrloch auf und erzeugt eine geringe Reibung. Je geringer die Reibung an der Außenseite zwischen Bohrschaft und Bohrloch ist, umso grösser ist der Bohrfortschritt der Bohrkrone bei gleicher Leistung des Kernbohrgerätes und die Lebensdauer des Bohrschaftes ist erhöht.

Besonders bevorzugt stimmt die Windungsrichtung des schraubenförmigen Führungselementes an der Außenseite des Bohrschaftes mit der Drehrichtung der Bohrkrone überein. Das an der Außenseite des Bohrschaftes überstehende schraubenförmige Führungselement kann beim Nassbohren mit der Bohrkrone den Abtransport der mit Bohrklein versetzten, verbrauchten Kühl- und Spülflüssigkeit unterstützen. Das schraubenförmige Führungselement wirkt als Förderwendel für die mit Bohrklein versetzte, verbrauchte Kühl- und Spülflüssigkeit, wenn die Drehrichtung der Bohrkrone und die Windungsrichtung des schraubenförmigen Führungselementes an der Außenseite des Bohrschaftes übereinstimmen. Dabei erfolgt die Windung des schraubenförmigen Führungselementes an der Außenseite des Bohrschaftes entgegen der Vorschubrichtung der Bohrkrone.

In einer zweiten bevorzugten Variante der Bohrkrone steht das mindestens eine schraubenförmige Führungselement an der Innenseite des Bohrschaftes mit einem Innenüberstand Δ_{I} gegenüber dem rohrförmigen Bohrschaft über. Ein an der Innenseite des Bohrschaftes überstehendes schraubenförmiges Führungselement verbessert die Führung des Bohrschaftes beim Bohren. Der Innenüberstand Δ_{I} des schraubenförmigen Führungselementes wird so eingestellt, dass das schraubenförmige Führungselement an der Innenseite des Bohrschaftes mit dem Bohrkern in Kontakt steht. Durch das überstehende schraubenförmige Führungselement weist der Bohrschaft eine geringe Kontaktfläche zum Bohrkern auf und erzeugt eine geringe Reibung. Je geringer die Reibung an der Innenseite zwischen Bohrschaft und Bohrkern ist, umso grösser ist der Bohrfortschritt der Bohrkrone bei gleicher Leistung des Kernbohrgerätes und die Lebensdauer des Bohrschaftes ist erhöht.

Besonders bevorzugt stimmt die Windungsrichtung des schraubenförmigen Führungselementes an der Innenseite des Bohrschaftes mit der Drehrichtung der Bohrkrone überein. Das an der Innenseite des Bohrschaftes überstehende schraubenförmige Führungselement kann beim Nassbohren mit der Bohrkrone den Transport der sauberen Kühl- und Spülflüssigkeit unterstützen. Das schraubenförmige Führungselement wirkt als Förderwendel für die saubere Kühl- und Spülflüssigkeit, wenn die Drehrichtung der Bohrkrone und die Windungsrichtung des schraubenförmigen Führungselementes an der Innenseite des Bohrschaftes übereinstimmen. Dabei erfolgt die Windung des schraubenförmigen Führungselementes an der Innenseite des Bohrschaftes in Vorschubrichtung der Bohrkrone.

In einer Weiterentwicklung der Bohrkrone weisen das mindestens eine schraubenförmige Führungselement und der Bohrschaft unterschiedliche Materialeigenschaften auf. Das mindestens eine schraubenförmige Führungselement ist als separates Element oder Material ausgebildet, das kraft- oder stoffschlüssig mit dem rohrförmigen Bohrschaft verbunden ist. Der rohrförmige Bohrschaft und das schraubenförmige Führungselement üben während des Bohrbetriebs unterschiedliche Funktionen aus und können im Hinblick auf unterschiedliche Anforderungen optimiert werden. Die Bohrkrone wird während des Bohrbetriebs über das schraubenförmige Führungselement geführt, wobei die Führung an der Außenseite des Bohrschaftes über das Bohrloch und an der Innenseite des Bohrschaftes über den Bohrkern erfolgt.

Besonders bevorzugt weist das mindestens eine schraubenförmige Führungselement eine höhere Zugfestigkeit, eine höhere Verschleißbeständigkeit oder eine höhere Zugfestigkeit und Verschleißbeständigkeit als der Bohrschaft auf. Das schraubenförmige Führungselement, das an der Außen- oder Innenseite des Bohrschaftes gegenüber dem rohrförmigen Bohrschaft übersteht, verbessert die Führung der Bohrkrone während des Bohrbetriebs. Je kleiner der Spalt zwischen dem schraubenförmigen Führungselement und dem Bohrloch an der Außenseite des Bohrschaftes bzw. zwischen dem schraubenförmigen Führungselement und dem Bohrkern an der Innenseite ist, umso besser wird der Bohrschaft geführt. Durch Reibung zwischen dem schraubenförmigen Führungselement und dem Bohrloch an der Außenseite bzw. zwischen dem schraubenförmigen Führungselement und dem Bohrkern an der Innenseite kann das schraubenförmige Führungselement abgetragen werden, wodurch sich die Führung des Bohrschaftes verschlechtert. Durch den Einsatz von Materialien, die eine höhere Zugfestigkeit, eine höhere Verschleißbeständigkeit oder eine höhere Zugfestigkeit und Verschleißbeständigkeit als der Bohrschaft aufweist, können die Eigenschaften des schraubenförmigen Führungselementes beeinflusst werden, so dass die Führung des Bohrschaftes über das schraubenförmige Führungselement möglichst während der gesamten Lebensdauer des Bohrschaftes gewährleistet ist.

In einer alternativen Ausführung der Bohrkrone weist der Bohrschaftabschnitt mehrere schraubenförmige Führungselemente auf, die mit dem rohrförmigen Bohrschaft kraft- oder stoffschlüssig verbunden sind und an der Außen- und/oder Innenseite des Bohrschaftes gegenüber dem rohrförmigen Bohrschaft überstehen. Die schraubenförmigen Führungselemente können an der Außenseite, der Innenseite oder der Außen- und Innenseite des Bohrschaftes vorgesehen sein und verbessern die Führung des Bohrschaftes während des Bohrbetriebs. Die Führung der Bohrkrone erfolgt an der Außenseite des Bohrschaftes über das Bohrloch und an der Innenseite des Bohrschaftes über den Bohrkern.

Bevorzugt steht ein erstes schraubenförmiges Führungselement der mehreren schraubenförmigen Führungselemente an der Außenseite des Bohrschaftes mit einem Außenüberstand Δ_{A} gegenüber dem Bohrschaft über und ein zweites schraubenförmiges Führungselement der mehreren schraubenförmigen Führungselemente steht an der Innenseite des Bohrschaftes mit einem Innenüberstand Δ_{I} gegenüber dem Bohrschaft über.

Besonders bevorzugt stimmen die Windungsrichtung des ersten schraubenförmigen Führungselementes an der Außenseite des Bohrschaftes mit der Drehrichtung der Bohrkrone und die Windungsrichtung des zweiten schraubenförmigen Führungselementes an der Innenseite des Bohrschaftes mit der Drehrichtung der Bohrkrone überein.

Bevorzugt weisen die schraubenförmigen Führungselemente und der Bohrschaft unterschiedliche Materialeigenschaften auf. Besonders bevorzugt weisen die schraubenförmigen Führungselemente eine höhere Zugfestigkeit, eine höhere Verschleißbeständigkeit oder eine höhere Zugfestigkeit und Verschleißbeständigkeit als der Bohrschaft auf. Durch den Einsatz von schraubenförmigen Führungselementen, die eine höhere Zugfestigkeit, eine höhere Verschleißbeständigkeit oder eine höhere Zugfestigkeit und Verschleißbeständigkeit als der Bohrschaft aufweisen, können die Eigenschaften der schraubenförmigen Führungselemente beeinflusst werden, so dass die Führung des Bohrschaftes über die schraubenförmigen Führungselemente möglichst während der gesamten Lebensdauer des Bohrschaftes gewährleistet ist.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine erste erfindungsgemäße Bohrkrone mit einem Bohrschaft und einem schraubenförmigen Führungselement, das an einer Außenseite des Bohrschaftes befestigt ist;
- FIGN. 2A, B: einen Längsschnitt durch den Bohrschaft der ersten Bohrkrone der FIG. 1 entlang der Schnittlinie A-A in FIG. 1B (FIG. 2A) sowie ein Detail des Bohrschaftes der FIG. 2A in einer vergrößerten Darstellung (FIG. 2B);
- FIG. 3: eine zweite erfindungsgemäße Bohrkrone mit einem Bohrschaft und einem schraubenförmigen Führungselement, das an einer Innenseite des Bohrschaftes befestigt ist;
- FIGN. 4A, B: einen Längsschnitt durch die zweite Bohrkrone der FIG. 3 entlang der Schnittlinie A-A in FIG. 3 (FIG. 4A) sowie ein Detail des Bohrschaftes der FIG. 4A in einer vergrößerten Darstellung (FIG. 4B); und
- FIG.5: eine dritte erfindungsgemäße Bohrkrone mit einem Bohrschaft, einem ersten schraubenförmigen Führungselement, das an einer Außenseite des Bohrschaftes befestigt ist, und einem zweiten schraubenförmigen Führungselement, das an einer Innenseite des Bohrschaftes befestigt ist.

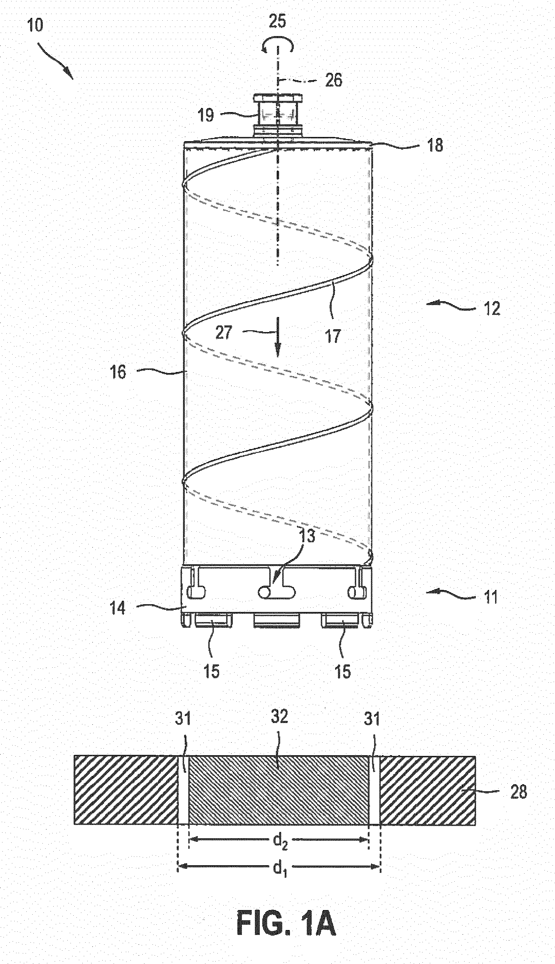

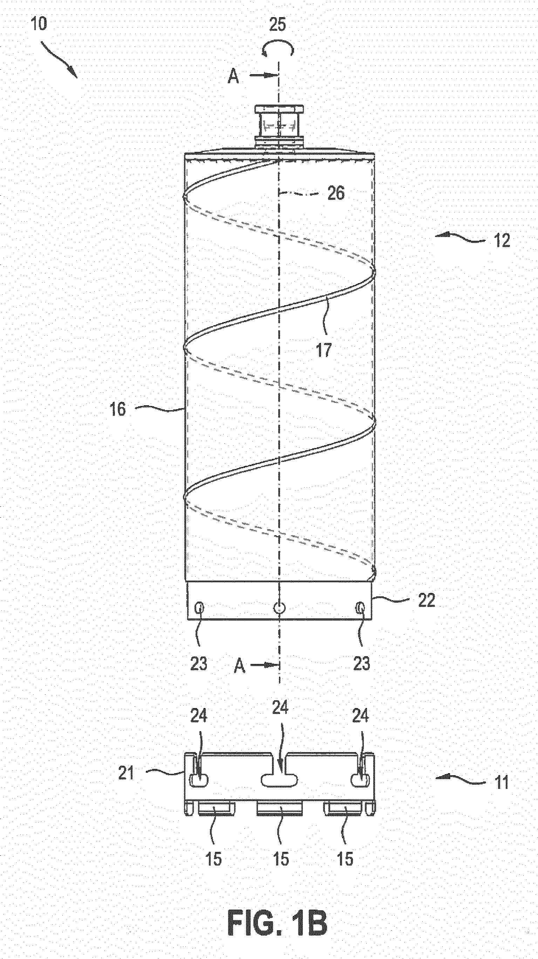

**FIGN. 1A****, B** zeigen eine erste Ausführungsform einer erfindungsgemäßen Bohrkrone **10**, die im Folgenden als erste Bohrkrone 10 bezeichnet wird. Die erste Bohrkrone 10 umfasst eine Bearbeitungsabschnitt **11**, einen Bohrschaftabschnitt **12** und eine Verbindungseinrichtung **13**, die den Bearbeitungsabschnitt 11 mit dem Bohrschaftabschnitt 12 verbindet. Dabei zeigt FIG. 1A die erste Bohrkrone 10 im verbundenen Zustand und FIG. 1B die erste Bohrkrone 10 im nicht-verbundenen Zustand.

Der Bearbeitungsabschnitt 11 umfasst einen Ringabschnitt **14** und mehrere Bohrsegmente **15**, die mit dem Ringabschnitt 14 verbunden sind. Die Bohrsegmente 15 werden ringförmig angeordnet und bilden einen Bohrring mit Zwischenräumen. Der Bearbeitungsabschnitt 11 kann anstatt mehrerer Bohrsegmente 15 auch ein einzelnes als geschlossener Bohrring ausgebildetes Bohrsegment aufweisen. Die Bohrsegmente 15 sind mit dem Ringabschnitt 14 verschweißt, verlötet, verschraubt oder in einer anderen geeigneten Befestigungsart am Ringabschnitt 14 befestigt. Der Bohrschaftabschnitt 12 umfasst einen rohrförmigen Bohrschaft **16**, ein schraubenförmiges Führungselement **17**, einen Deckel **18** und ein Einsteckende **19**, über das die erste Bohrkrone 10 in einer Werkzeugaufnahme eines Kernbohrgerätes befestigt wird.

Die Verbindungseinrichtung 13 der ersten Bohrkrone 10 ist als lösbare Verbindungseinrichtung in Form einer kombinierten Steck- und Stiftverbindung ausgebildet und umfasst ein erstes Steckverbindungselement **21**, das mit dem Ringabschnitt 14 verbunden ist, und ein zweites Steckverbindungselement **22**, das mit dem Bohrschaft 16 verbunden ist. Das erste und zweite Steckverbindungselement 21, 22 bilden eine Steckverbindung und werden zusätzlich über eine Stiftverbindung gesichert. Die Stiftverbindung umfasst mehrere Stiftelemente **23**, die in T-förmige Schlitze **24** eingeführt werden. Die Stiftelemente 23 sind an einer Außenseite des zweiten Steckverbindungselementes 22 befestigt und die T-förmigen Schlitze 24 sind im ersten Steckverbindungselement 21 vorgesehen. Der Bearbeitungsabschnitt 11 lässt sich vom Bediener einfach und schnell mit dem Bohrschaftabschnitt 12 verbinden. Dazu wird der Bearbeitungsabschnitt 11 mit dem ersten Steckverbindungselement 21 so auf das zweite Steckverbindungselement 22 des Bohrschaftabschnittes 12 gesteckt, dass die Stiftelemente 23 in den Schlitzen 24 angeordnet sind.

Im Bohrbetrieb wird die erste Bohrkrone 10 von einem Kernbohrgerät in einer Drehrichtung **25** um eine Drehachse **26** angetrieben, wobei die Drehachse 26 mit einer Längsachse des rohrförmigen Bohrschaftes 16 zusammenfällt. Während der Drehung der ersten Bohrkrone 10 um die Drehachse 26 wird die erste Bohrkrone 10 entlang einer Vorschubrichtung **27** in ein zu bearbeitendes Werkstück **28** bewegt, wobei die Vorschubrichtung 27 parallel zur Drehachse 26 verläuft. Die erste Bohrkrone 10 erzeugt im Werkstück 28 ein Bohrloch **31** mit einem Bohrlochdurchmesser **d₁** und einen Bohrkern **32** mit einem Kerndurchmesser **d₂.** Die Bohrsegmente 15 bilden einen Bohrring mit einem Innendurchmesser, der dem Kerndurchmesser d₁ entspricht, und einem Außendurchmesser, der dem Bohrlochdurchmesser d₂ entspricht.

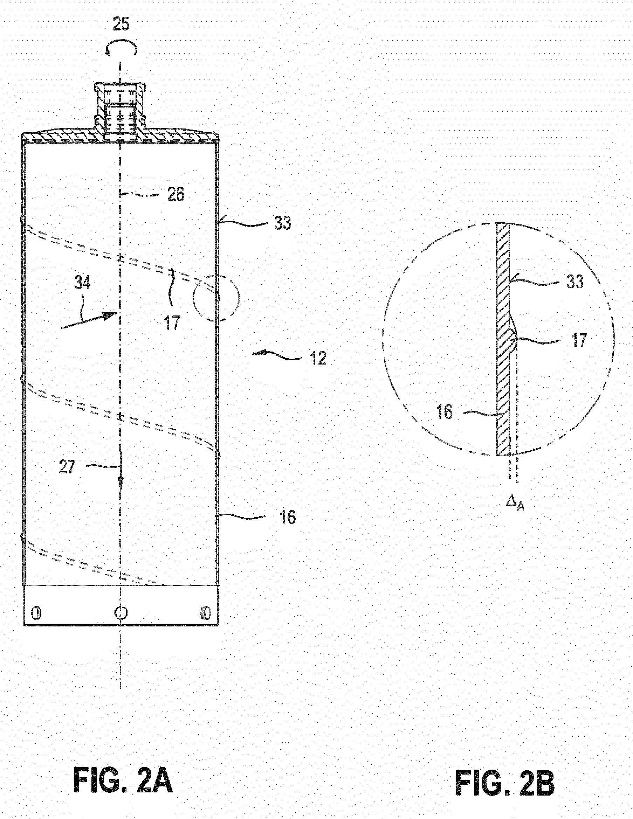

**FIGN. 2A****, B** zeigt einen Längsschnitt durch den Bohrschaftabschnitt 12 der ersten Bohrkrone 10 der FIG. 1 entlang der Schnittlinie A-A in FIG. 1B (FIG. 2A) sowie ein Detail des Bohrschaftes 16 der FIG. 2A in einer vergrößerten Darstellung (FIG. 2B).

Das schraubenförmige Führungselement 17 ist an einer Außenseite **33** des Bohrschaftes 16 angeordnet und windet sich in einer Windungsrichtung **34** mit einer konstanten Steigung um die Außenseite 33 des Bohrschaftes 16. Dabei erfolgt die Windung des schraubenförmigen Führungselementes 17 an der Außenseite 33 des Bohrschaftes 16 entgegen der Vorschubrichtung 27 der ersten Bohrkrone 10. Das Führungselement 17 ist kraft- oder stoffschlüssig mit dem Bohrschaft 16 verbunden und erstreckt sich über die gesamte Höhe des Bohrschaftes 16.

Das schraubenförmige Führungselement 17 ist beispielsweise als Spiralfederelement ausgebildet, das an der Außenseite 33 des Bohrschaftes 16 mit dem Bohrschaft 16 verschweißt oder verklebt wird. Alternativ kann das schraubenförmige Führungselement 17 durch Auftragsschweißen oder durch Sintern hergestellt werden. Beim Auftragsschweißen wird ein pulver- oder drahtförmiger Schweisszusatzwerkstoff auf die Außenseite 33 des Bohrschaftes 16 aufgeschweisst. Beim Sintern wird eine Paste auf die Außenseite 33 des Bohrschaftes 16 aufgetragen, die durch Sintern unter Temperatureinwirkung mit dem Bohrschaft 16 verbunden wird.

Das Führungselement 17 steht an der Außenseite 33 des Bohrschaftes 16 mit einem Außenüberstand Δ_{A} gegenüber dem Bohrschaft 16 über. Dabei wird der Außenüberstand Δ_{A} so gewählt, dass das Führungselement 17 mit dem Bohrloch 31 in Kontakt steht und der Bohrschaft 16 im Bohrloch 31 geführt wird. Das Führungselement 17 reduziert die Kontaktfläche zwischen Bohrschaft 16 und Bohrloch 31 und sorgt gleichzeitig für eine Führung des Bohrschaftes 16 im Bohrloch 31. Dadurch, dass sich das Führungselement 17 über die gesamte Höhe des Bohrschaftes 16 erstreckt, ist die Führung des Bohrschaftes 16 für sämtliche Tiefen von Bohrlöchern gewährleistet. Je kleiner die Kontaktfläche zwischen dem Bohrschaft 16 und dem Bohrloch 31 ist, umso grösser ist der Bohrfortschritt der ersten Bohrkrone 10 bei gleicher Leistung des Kernbohrgerätes und umso länger ist die Lebensdauer des Bohrschaftes 16.

Die Lebensdauer des Bohrschaftabschnittes 12 der ersten Bohrkrone 10 wird vor allem durch die Verschleißbeständigkeit des Führungselementes 17 an der Außenseite 33 des Bohrschaftes 16 bestimmt. Durch Reibung zwischen dem Führungselement 17 und dem Bohrloch 31 kann das Führungselement 17 abgetragen werden, wodurch sich die Führung des Bohrschaftes 16 verschlechtert. Durch den Einsatz von Materialien mit einer hohen Zugfestigkeit und/oder einer hohen Verschleißbeständigkeit kann die Lebensdauer des Führungselementes 17 verlängert werden, so dass die Führung des Bohrschaftes 16 über das schraubenförmige Führungselement 17 möglichst während der gesamten Lebensdauer des Bohrschaftes 16 gewährleistet ist.

Neben der Führung des Bohrschaftes 16 kann das schraubenförmige Führungselement 17 beim Nassbohren mit der ersten Bohrkrone 10 den Flüssigkeitstransport einer Kühl- und Spülflüssigkeit unterstützen. Beim Nassbohren ist eine Kühl- und Spülflüssigkeit erforderlich, die als Kühlflüssigkeit die Bohrsegmente 15 kühlt und als Spülflüssigkeit Bohrklein aus dem Bohrloch 31 abtransportiert. Das schraubenförmige Führungselement 17 wirkt bei der ersten Bohrkrone 10 als Förderwendel für die mit Bohrklein versetzte, verbrauchte Kühl- und Spülflüssigkeit, da die Windungsrichtung 34 des schraubenförmigen Führungselementes 17 an der Außenseite 33 des Bohrschaftes 16 mit der Drehrichtung 25 der ersten Bohrkrone 10 übereinstimmt.

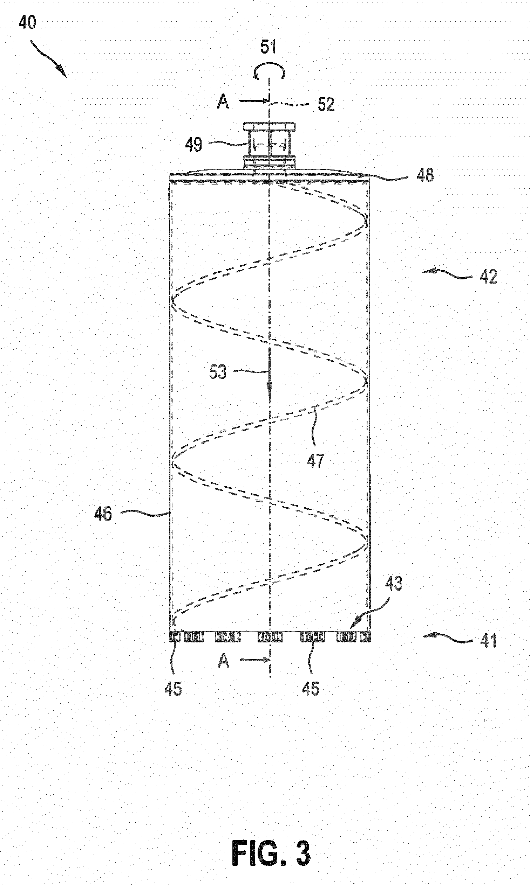

**FIG. 3** zeigt eine zweite Ausführungsform einer erfindungsgemäßen Bohrkrone **40**, die im Folgenden als zweite Bohrkrone 40 bezeichnet wird. Die zweite Bohrkrone 40 umfasst einen Bearbeitungsabschnitt **41**, einen Bohrschaftabschnitt **42** und eine Verbindungseinrichtung **43**, die den Bearbeitungsabschnitt 41 mit dem Bohrschaftabschnitt 42 verbindet.

Der Bearbeitungsabschnitt 41 umfasst mehrere Bohrsegmente **45**, die ringförmig angeordnet sind und einen Bohrring mit Zwischenräumen bilden. Der Bohrschaftabschnitt 42 umfasst einen rohrförmigen Bohrschaft **46**, ein schraubenförmiges Führungselement **47**, einen Deckel **48** und ein Einsteckende **49**, über das die zweite Bohrkrone 40 in einer Werkzeugaufnahme eines Kernbohrgerätes befestigt wird. Die Bohrsegmente 45 sind mit dem Bohrschaft 46 über die Verbindungseinrichtung 43 unlösbar verbunden, wobei die Verbindungseinrichtung 43 als Schweißverbindung, Lötverbindung oder Klebeverbindung ausgebildet ist. Grundsätzlich eignet sich jede Verbindungseinrichtung, die die Bohrsegmente 45 und den Bohrschaft 46 lösbar oder unlösbar verbindet.

Die zweite Bohrkrone 40 zeigt einen Bearbeitungsabschnitt 41 mit mehreren Bohrsegmenten 45, die mittels der Verbindungseinrichtung 43 am Bohrschaft 46 unlösbar befestigt sind. Der Bearbeitungsabschnitt 41 kann anstatt mehrerer Bohrsegmente 45 auch ein einzelnes als geschlossener Bohrring ausgebildetes Bohrsegment aufweisen. Außerdem kann der Bearbeitungsabschnitt 41 einen Ringabschnitt aufweisen, der zwischen den Bohrsegmenten 45 und dem Bohrschaft 46 angeordnet ist. Die Bohrsegmente 45 werden am Ringabschnitt verschweißt, verlötet, verschraubt oder in einer anderen geeigneten Befestigungsart am Ringabschnitt befestigt und der Ringabschnitt und der Bohrschaft 46 werden mittels einer Verbindungseinrichtung lösbar oder unlösbar verbunden.

Im Bohrbetrieb wird die zweite Bohrkrone 40 von einem Kernbohrgerät in einer Drehrichtung **51** um eine Drehachse **52** angetrieben, wobei die Drehachse 52 mit einer Längsachse des Bohrschaftes 46 zusammenfällt. Während der Drehung der zweiten Bohrkrone 40 um die Drehachse 52 wird die zweite Bohrkrone 40 entlang einer Vorschubrichtung 53 in ein zu bearbeitendes Werkstück bewegt, wobei die Vorschubrichtung 53 parallel zur Drehachse 52 verläuft. Die zweite Bohrkrone 40 erzeugt wie die erste Bohrkrone im Werkstück 28 das Bohrloch 31 mit dem Bohrlochdurchmesser d₁ und den Bohrkern 32 mit dem Kerndurchmesser d₂. Die Bohrsegmente 45 bilden einen Bohrring mit einem Innendurchmesser, der dem Kerndurchmesser d₂ entspricht, und einem Außendurchmesser, der dem Bohrlochdurchmesser d₁ entspricht.

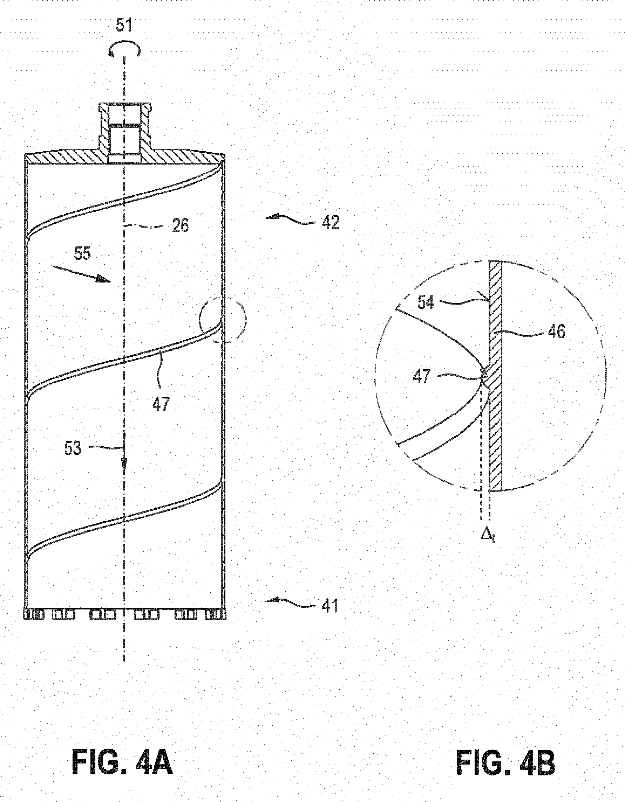

**FIGN. 4A****, B** zeigen einen Längsschnitt durch die zweite Bohrkrone 40 der FIG. 3 entlang der Schnittlinie A-A in FIG. 3 (FIG. 4A) sowie ein Detail des Bohrschaftes 46 der FIG. 4A in einer vergrößerten Darstellung (FIG. 4B).

Das schraubenförmige Führungselement 47 ist an einer Innenseite **54** des Bohrschaftes 46 angeordnet und windet sich in einer Windungsrichtung **55** mit einer konstanten Steigung um die Innenseite 54 des Bohrschaftes 46. Dabei erfolgt die Windung des schraubenförmigen Führungselementes 47 an der Innenseite 54 des Bohrschaftes 46 in Vorschubrichtung 53 der zweiten Bohrkrone 40. Das Führungselement 47 ist kraft- oder stoffschlüssig mit dem Bohrschaft 46 verbunden und erstreckt sich über die gesamte Höhe des Bohrschaftes 46.

Das schraubenförmige Führungselement 47 ist beispielsweise als Spiralfederelement ausgebildet, das an der Innenseite 54 des Bohrschaftes 46 mit dem Bohrschaft 46 verschweißt oder verklebt wird. Alternativ kann das schraubenförmige Führungselement 47 durch Auftragsschweißen oder durch Sintern hergestellt werden. Beim Auftragsschweißen wird ein pulver- oder drahtförmiger Schweisszusatzwerkstoff auf die Innenseite 54 des Bohrschaftes 46 aufgeschweisst. Beim Sintern wird eine Paste auf die Innenseite 54 des Bohrschaftes 46 aufgetragen, die durch Sintern unter Temperatureinwirkung mit dem Bohrschaft 46 verbunden wird.

Das Führungselement 47 steht an der Innenseite 54 des Bohrschaftes 46 mit einem Innenüberstand Δ_{I} gegenüber dem Bohrschaft 46 über. Dabei wird der Innenüberstand Δ_{I} so gewählt, dass das Führungselement 47 mit dem Bohrkern 32 in Kontakt steht und der Bohrschaft 46 über den Bohrkern 32 geführt wird. Das Führungselement 47 reduziert die Kontaktfläche zwischen Bohrschaft 46 und Bohrkern 32 und sorgt gleichzeitig für eine Führung des Bohrschaftes 46 über den Bohrkern 32. Dadurch, dass sich das Führungselement 47 über die gesamte Höhe des Bohrschaftes 46 erstreckt, ist die Führung des Bohrschaftes 46 für sämtliche Tiefen von Bohrlöchern gewährleistet. Je kleiner die Kontaktfläche zwischen dem Bohrschaft 16 und dem Bohrkern 32 ist, umso grösser ist der Bohrfortschritt der zweiten Bohrkrone 40 bei gleicher Leistung des Kernbohrgerätes und umso länger ist die Lebensdauer des Bohrschaftes 46.

Die Lebensdauer des Bohrschaftabschnittes 42 der zweiten Bohrkrone 40 wird vor allem durch die Verschleißbeständigkeit des Führungselementes 47 an der Innenseite 54 des Bohrschaftes 46 bestimmt. Durch Reibung zwischen dem Führungselement 47 und dem Bohrkern 31 kann das Führungselement 47 abgetragen werden, wodurch sich die Führung des Bohrschaftes 46 verschlechtert. Durch den Einsatz von Materialien mit einer hohen Zugfestigkeit und/oder einer hohen Verschleißbeständigkeit kann die Lebensdauer des Führungselementes 47 verlängert werden, so dass die Führung des Bohrschaftes 46 über das schraubenförmige Führungselement 47 möglichst während der gesamten Lebensdauer des Bohrschaftes 46 gewährleistet ist.

Neben der Führung des Bohrschaftes 46 kann das schraubenförmige Führungselement 47 den Flüssigkeitstransport der Kühl- und Spülflüssigkeit beim Nassbohren mit der zweiten Bohrkrone 40 unterstützen. Die Kühl- und Spülflüssigkeit dient dazu, als Kühlflüssigkeit die Bohrsegmente 45 zu kühlen und als Spülflüssigkeit Bohrklein aus dem Bohrloch 31 abzutransportieren. Das schraubenförmige Führungselement 47 wirkt bei der zweiten Bohrkrone 40 als Förderwendel für die saubere Kühl- und Spülflüssigkeit, da die Windungsrichtung 55 des schraubenförmigen Führungselementes 47 an der Innenseite 54 des Bohrschaftes 46 mit der Drehrichtung 51 der zweiten Bohrkrone 40 übereinstimmt.

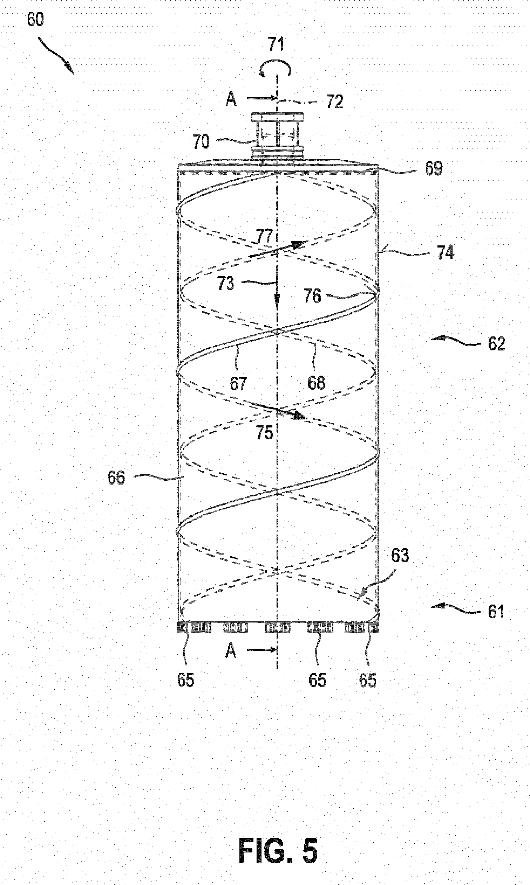

**FIG. 5** zeigt eine dritte Ausführungsform einer erfindungsgemäßen Bohrkrone **60**, die im Folgenden als dritte Bohrkrone 60 bezeichnet wird. Die dritte Bohrkrone 60 umfasst einen Bearbeitungsabschnitt **61**, einen Bohrschaftabschnitt **62** und eine Verbindungseinrichtung **63**, die den Bearbeitungsabschnitt 61 mit dem Bohrschaftabschnitt 62 verbindet.

Der Bearbeitungsabschnitt 61 umfasst einen Ringabschnitt **64** und mehrere Bohrsegmente **65**, die mit dem Ringabschnitt 64 verschweißt, verlötet, verschraubt oder in einer anderen geeigneten Befestigungsart am Ringabschnitt 64 befestigt sind. Der Bohrschaftabschnitt 62 umfasst einen rohrförmigen Bohrschaft **66**, ein erstes schraubenförmiges Führungselement **67**, ein zweites schraubenförmiges Führungselement **68**, einen Deckel **69** und ein Einsteckende **70**, über das die dritte Bohrkrone 60 in einer Werkzeugaufnahme eines Kernbohrgerätes befestigt wird.

Im Bohrbetrieb wird die dritte Bohrkrone 60 von einem Kernbohrgerät in einer Drehrichtung **71** um eine Drehachse **72** angetrieben, wobei die Drehachse 72 mit der Längsachse des Bohrschaftes 66 zusammenfällt. Während der Drehung der dritten Bohrkrone 60 um die Drehachse 72 wird die dritte Bohrkrone 60 entlang einer Vorschubrichtung 73 in ein zu bearbeitendes Werkstück bewegt, wobei die Vorschubrichtung 73 parallel zur Drehachse 72 verläuft. Die dritte Bohrkrone 60 erzeugt wie die erste Bohrkrone 10 im Werkstück 28 das Bohrloch 31 mit dem Bohrlochdurchmesser d₁ und den Bohrkern 32 mit dem Kerndurchmesser d₂. Die Bohrsegmente 65 bilden einen Bohrring mit einem Innendurchmesser, der dem Kerndurchmesser d₂ entspricht, und einem Außendurchmesser, der dem Bohrlochdurchmesser d₁ entspricht.

Das erste schraubenförmige Führungselement 67 ist an einer Außenseite **74** des Bohrschaftes 66 angeordnet und windet sich in einer ersten Windungsrichtung **75** mit einer konstanten Steigung um die Außenseite 74 des Bohrschaftes 66, wobei die Windung des ersten schraubenförmigen Führungselementes 67 entgegen der Vorschubrichtung 73 der dritten Bohrkrone 60 erfolgt. Das zweite schraubenförmige Führungselement 68 ist an einer Innenseite **76** des Bohrschaftes 66 angeordnet und windet sich in einer zweiten Windungsrichtung **77** mit einer konstanten Steigung um die Innenseite 75 des Bohrschaftes 66, wobei die Windung des zweiten schraubenförmigen Führungselementes 67 in Vorschubrichtung 73 der dritten Bohrkrone 60 erfolgt.

Das erste und zweite Führungselement 67, 68 sind kraft- oder stoffschlüssig mit dem Bohrschaft 16 verbunden und erstrecken sich über die gesamte Höhe des Bohrschaftes 66. Das erste Führungselement 67 steht an der Außenseite 74 des Bohrschaftes 66 mit einem Außenüberstand Δ_{A} gegenüber dem Bohrschaft 66 über, wobei der Außenüberstand Δ_{A} so gewählt wird, dass das erste Führungselement 67 mit dem Bohrloch 31 in Kontakt steht und der Bohrschaft 66 im Bohrloch 31 geführt wird. Das zweite Führungselement 68 steht an der Innenseite 76 des Bohrschaftes 66 mit einem Innenüberstand Δ_{I} gegenüber dem Bohrschaft 66 über, wobei der Innenüberstand Δ_{I} so gewählt wird, dass das zweite Führungselement 68 mit dem Bohrkern 32 in Kontakt steht und der Bohrschaft 66 über den Bohrkern 32 geführt wird. Das erste und zweite Führungselement 67, 68 reduzieren die Kontaktfläche zwischen Bohrschaft 66 und Bohrloch 31 bzw. und zwischen Bohrschaft 66 und Bohrkern 32. Dadurch, dass sich das erste und zweite Führungselement 67, 68 über die gesamte Höhe des Bohrschaftes 66 erstrecken, ist die Führung des Bohrschaftes 66 für sämtliche Tiefen von Bohrlöchern gewährleistet.

Die Lebensdauer des Bohrschaftabschnittes 62 der dritten Bohrkrone 60 wird vor allem durch die Verschleißbeständigkeit des ersten Führungselementes 67 an der Außenseite 74 des Bohrschaftes 66 und die Verschleißbeständigkeit des zweiten Führungselementes 68 an der Innenseite 76 des Bohrschaftes 66 bestimmt. Durch Reibung zwischen dem ersten Führungselement 47 und dem Bohrloch 31 und dem zweiten Führungselement 68 und dem Bohrkern 32 können das erste und zweite Führungselement 67, 68 abgetragen werden, wodurch sich die Führung des Bohrschaftes 66 verschlechtert. Durch den Einsatz von Materialien mit einer hohen Zugfestigkeit und/oder einer hohen Verschleißbeständigkeit können die Lebensdauer des ersten und zweiten Führungselementes 67, 68 verlängert werden, so dass die Führung des Bohrschaftes 66 möglichst während der gesamten Lebensdauer des Bohrschaftes 66 gewährleistet ist.

Neben der Führung des Bohrschaftes 66 können das erste und zweite schraubenförmige Führungselement 67, 68 den Flüssigkeitstransport der Kühl- und Spülflüssigkeit beim Nassbohren mit der dritten Bohrkrone 60 unterstützen. Die Kühl- und Spülflüssigkeit dient dazu, als Kühlflüssigkeit die Bohrsegmente 65 zu kühlen und als Spülflüssigkeit Bohrklein aus dem Bohrloch 31 abzutransportieren. Saubere Kühl- und Spülflüssigkeit wird an der Innenseite 76 des Bohrschaftes 66 zugeführt und mit Bohrklein versetzte, verbrauchte Kühl- und Spülflüssigkeit wird an der Außenseite 74 des Bohrschaftes 66 abgeführt.

Das erste schraubenförmige Führungselement 67 wirkt bei der dritten Bohrkrone 60 als Förderwendel für die mit Bohrklein versetzte, verbrauchte Kühl- und Spülflüssigkeit, da die erste Windungsrichtung 75 des ersten Führungselementes 67 an der Außenseite 74 des Bohrschaftes 66 mit der Drehrichtung 71 der dritten Bohrkrone 60 übereinstimmt.

Das zweite schraubenförmige Führungselement 68 wirkt bei der dritten Bohrkrone 60 als Förderwendel für die saubere Kühl- und Spülflüssigkeit, da die zweite Windungsrichtung 77 des zweiten Führungselementes 68 an der Innenseite 76 des Bohrschaftes 66 mit der Drehrichtung 71 der dritten Bohrkrone 60 übereinstimmt.

## Patentansprüche

1. Bohrkrone (10; 40; 60) zum Erstellen eines Bohrloches (31) mit einem Bohrlochdurchmesser (d₁) und einem Bohrkern (32) mit einem Kerndurchmesser (d₂) in einem Werkstück (28), wobei die Bohrkrone (10; 40; 60) in einer Drehrichtung (25; 51; 71) um eine Drehachse (26; 52; 72) bewegbar ist, aufweisend:
▪ einen Bearbeitungsabschnitt (11; 41; 61) mit einem oder mehreren Bohrsegmenten (15; 45; 65), die einen Bohrring mit einem Innendurchmesser, der dem Kerndurchmesser (d₂) entspricht, und einem Außendurchmesser, der dem Bohrlochdurchmesser (d₁) entspricht, bilden,
▪ einen Bohrschaftabschnitt (12; 42; 62) mit einem rohrförmigen Bohrschaft (16; 46; 66) und
▪ eine Verbindungseinrichtung (13; 43; 63), die den Bearbeitungsabschnitt (11; 41; 61) und den Bohrschaftabschnitt (12; 42; 62) lösbar oder unlösbar miteinander verbindet,
**dadurch gekennzeichnet, dass** der Bohrschaftabschnitt (12; 42; 62) mindestens ein schraubenförmiges Führungselement (17; 47; 67, 68) aufweist, das mit dem rohrförmigen Bohrschaft (16; 46; 66) kraft- oder stoffschlüssig verbunden ist und an einer Außenseite (33; 74) des Bohrschaftes (16; 66) und/oder einer Innenseite (54; 76) des Bohrschaftes (46; 66) gegenüber dem rohrförmigen Bohrschaft (16; 46; 66) übersteht.

2. Bohrkrone nach Anspruch 1, **dadurch gekennzeichnet, dass** das mindestens eine schraubenförmige Führungselement (17) an der Außenseite (33) des Bohrschaftes (16) mit einem Außenüberstand (Δ_{A}) gegenüber dem rohrförmigen Bohrschaft (16) übersteht.

3. Bohrkrone nach Anspruch 2, **dadurch gekennzeichnet, dass** die Windungsrichtung (34) des schraubenförmigen Führungselementes (17) an der Außenseite (33) des Bohrschaftes (16) mit der Drehrichtung (25) der Bohrkrone (10) übereinstimmt.

4. Bohrkrone nach Anspruch 1, **dadurch gekennzeichnet, dass** das mindestens eine schraubenförmige Führungselement (47) an der Innenseite (54) des Bohrschaftes (46) mit einem Innenüberstand (Δ_{I}) gegenüber dem rohrförmigen Bohrschaft (46) übersteht.

5. Bohrkrone nach Anspruch 4, **dadurch gekennzeichnet, dass** die Windungsrichtung (55) des schraubenförmigen Führungselementes (47) an der Innenseite (54) des Bohrschaftes (46) mit der Drehrichtung (51) der Bohrkrone (40) übereinstimmt.

6. Bohrkrone nach einem der Ansprüche 1 bis 5, **dadurch gekennzeichnet, dass** das mindestens eine schraubenförmige Führungselement (17; 47) und der Bohrschaft (16; 46) unterschiedliche Materialeigenschaften aufweisen.

7. Bohrkrone nach Anspruch 6, **dadurch gekennzeichnet, dass** das mindestens eine schraubenförmige Führungselement (17; 47) eine höhere Zugfestigkeit, eine höhere Verschleißbeständigkeit oder eine höhere Zugfestigkeit und Verschleißbeständigkeit als der Bohrschaft (16; 46) aufweist.

8. Bohrkrone nach Anspruch 1, **dadurch gekennzeichnet, dass** der Bohrschaftabschnitt (62) mehrere schraubenförmige Führungselemente (67, 68) aufweist, die mit dem rohrförmigen Bohrschaft (66) kraft- oder stoffschlüssig verbunden sind und an der Außenseite (74) und/oder Innenseite (76) des Bohrschaftes (66) gegenüber dem rohrförmigen Bohrschaft (66) überstehen.

9. Bohrkrone nach Anspruch 8, **dadurch gekennzeichnet, dass** ein erstes schraubenförmiges Führungselement (67) der mehreren schraubenförmigen Führungselemente (67, 68) an der Außenseite (74) des Bohrschaftes (66) mit einem Außenüberstand (Δ_{A}) gegenüber dem rohrförmigen Bohrschaft (66) übersteht und ein zweites schraubenförmiges Führungselement (68) der mehreren schraubenförmigen Führungselemente (67, 68) an der Innenseite (76) des Bohrschaftes (66) mit einem Innenüberstand (Δ_{I}) gegenüber dem rohrförmigen Bohrschaft (66) übersteht.

10. Bohrkrone nach Anspruch 9, **dadurch gekennzeichnet, dass** die erste Windungsrichtung (75) des ersten schraubenförmigen Führungselementes (67) an der Außenseite (74) des Bohrschaftes (66) mit der Drehrichtung (71) der Bohrkrone (60) übereinstimmt und die zweite Windungsrichtung (77) des zweiten schraubenförmigen Führungselementes (68) an der Innenseite (76) des Bohrschaftes (66) mit der Drehrichtung (71) der Bohrkrone (60) übereinstimmt.

11. Bohrkrone nach einem der Ansprüche 8 bis 10, **dadurch gekennzeichnet, dass** das erste und zweite schraubenförmige Führungselement (67, 68) und der Bohrschaft (66) unterschiedliche Materialeigenschaften aufweisen.

12. Bohrkrone nach Anspruch 11, **dadurch gekennzeichnet, dass** das erste und zweite schraubenförmige Führungselement (67, 68) eine höhere Zugfestigkeit, eine höhere Verschleißbeständigkeit oder eine höhere Zugfestigkeit und Verschleißbeständigkeit als der Bohrschaft (66) aufweisen.
